# EUROPÄISCHE PATENTSCHRIFT

(11) **EP 3 676 562 B1**
(45) Veröffentlichungstag und Bekanntmachung des Hinweises auf die Patenterteilung: **09.03.2022**
(21) Anmeldenummer: 18765059.3
(22) Anmeldetag: 28.08.2018
(51) Int. Cl.: G01B 5/20, F16H 7/16, F16H 55/52

(54) **VORRICHTUNG UND VERFAHREN ZUR RUNDLAUFMESSUNG EINER INNENVERZAHNUNG EINES BAUTEILS, INSBESONDERE EINER WELLE**
DEVICE AND METHOD FOR MEASURING THE TRUE RUNNING OF AN INTERNAL TOOTH SET OF A COMPONENT, IN PARTICULAR A SHAFT
DISPOSITIF ET PROCÉDÉ DE MESURE DE LA CONCENTRICITÉ D'UNE DENTURE INTÉRIEURE D'UNE PIÈCE, EN PARTICULIER UN ARBRE

(30) Priorität: 31.08.2017 DE 102017215285
(43) Veröffentlichungstag der Anmeldung: 08.07.2020
(73) Patentinhaber: thyssenkrupp Dynamic Components TecCenter AG, 9492 Eschen (LI); thyssenkrupp AG, 45143 Essen (DE)
(72) Erfinder: VOß, Gernot, 38871 Veckenstedt (DE)
(74) Vertreter: thyssenkrupp Intellectual Property GmbH
(86) Internationale Anmeldenummer: PCT/EP2018/073081
(87) Internationale Veröffentlichungsnummer: WO 2019/042964

(56) Entgegenhaltungen:
- CN-U- 203 083 480
- JP-A- 2002 228 438
- US-A1- 2011 232 116

## Beschreibung

Die vorliegende Erfindung betrifft eine Vorrichtung zur Rundlaufmessung einer Innenverzahnung eines Bauteils, insbesondere einer Welle, mit einem Ermittlungssegment aufweisend eine Spindeleinheit, eine Spindelhalterung, ein Verstellelement und eine Messeinheit. Ferner betrifft die vorliegende Erfindung ein Verfahren zur Rundlaufmessung einer Innenverzahnung eines Bauteils, insbesondere einer Welle, mittels einer Vorrichtung zur Rundlaufmessung gemäß der vorgenannten Art.

### STAND DER TECHNIK

Es ist grundlegend bekannt, dass bei einer Messung des Rundlaufes von vornehmlich tief in der Ausnehmung der Welle liegenden Innenverzahnungen, insbesondere mit kleinen Durchmessern, die technisch sehr aufwendige Lasertechnik herangezogen werden muss, insbesondere bei einer geforderten 100% Messkontrolle der Innenverzahnung. Diese Kontrollen bzw. Messungen sind sehr zeitaufwendig. Zudem birgt die Messmethodik mittels Laser den Nachteil, dass diese bei Bauteilen, welche beispielsweise noch mit Bearbeitungsmedien benetzt sind, keine genauen Messwerte liefert und folglich nicht zur Anwendung gelangen kann, bevor das Bauteil kosten- und zeitintensiv von diesen Bearbeitungsmedien gereinigt wurde. Insbesondere die tief in der Ausnehmung des Bauteils, wie einer Welle, liegenden Innenverzahnungen sind, wie grundlegen bekannt, sehr schwer messbar. Auch ist es als grundlegend bekannt anzusehen, dass hierfür Koordinatenmessmaschinen zum Einsatz gelangen, deren Messmethodik sehr zeitaufwendig und daher wiederum sehr kostenintensiv ist.

Eine Vorrichtung zur Rundlaufmessung einer Innenverzahnung eines Getriebes ist aus DE 1 802 363 B1 bekannt. Eine Vorrichtung zur Rundlaufmessung einer Außenverzahnung eines Getriebes ist in JP 2002-228438 A offenbart.

### OFFENBARUNG DER ERFINDUNG

Es ist daher die Aufgabe der vorliegenden Erfindung, die voranstehend beschriebenen Nachteile bei einer Vorrichtung und einem Verfahren zur Rundlaufmessung einer Innenverzahnung beispielsweise einer Welle zumindest teilweise zu beheben. Insbesondere ist es die Aufgabe der vorliegenden Erfindung eine Vorrichtung und ein Verfahren zur Rundlaufmessung einer Innenverzahnung zu schaffen, die auf eine einfache und kostengünstige Art und Weise auch eine tief in Ausnehmungen des Bauteils ausgebildete Innenverzahnung, insbesondere deren Rundlauf messen können, auch wenn die Innenverzahnung selbst einen klein dimensionierten Durchmesser aufweist.

Die voranstehende Aufgabe wird gelöst durch eine Vorrichtung zur Rundlaufmessung einer Innenverzahnung mit den Merkmalen gemäß Anspruchs 1 sowie durch ein Verfahren zur Rundlaufmessung einer Innenverzahnung mit den Merkmalen gemäß Anspruch 13. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Vorrichtung beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann. Außerdem kann das erfindungsgemäße Verfahren mittels der erfindungsgemäßen Vorrichtung durchgeführt werden. Es ist des Weiteren denkbar, dass die erfindungsgemäße Vorrichtung sowie das erfindungsgemäße Verfahren auch für eine Rundlaufmessung einer Außenverzahnung eines Bauteiles, wie einer Welle zur Anwendung gelangen können.

Die erfindungsgemäße Vorrichtung zur Rundlaufmessung einer Innenverzahnung eines Bauteils, insbesondere einer Welle, weist zumindest ein Ermittlungssegment zum Ermitteln einer Rundlaufabweichung auf. Das Ermittlungssegment umfasst zumindest eine Spindeleinheit, welche eine Abgriffsspindel mit einem an einem ersten, insbesondere ersten axialen Ende der Abgriffsspindel angeordneten Lehrenzahnrad zum Abgreifen des Rundlaufs der Innenverzahnung des Bauteils, und eine Abgabespindel zur Übertragung des abgegriffenen Rundlaufs von der Abgriffsspindel auf eine Messeinheit aufweist. Die Messeinheit selbst ist dabei vorteilhaft in Gestalt eines Messgebers oder Stifttasters oder einer vergleichbaren Apparatur ausgebildet. Die Abgabespindel ist vorteilhaft mittelbar oder unmittelbar an einem zweiten, insbesondere zweiten axialen Ende der Abgriffsspindel, welches dem ersten Ende der Abgriffsspindel gegenüberliegt, angeordnet. Eine Berührung der Abgriffsspindel und der Abgabespindel ist nicht erforderlich, wird jedoch auch nicht ausgeschlossen. Des Weitern umfasst das Ermittlungssegment eine Spindelhalterung zumindest zum Halten und Positionieren der Abgriffsspindel oder der Abgabespindel, vorteilhaft der Spindeleinheit, sowie ein Verstellelement zumindest zum Positionieren wenigstens des mit der Abgriffsspindel verbundenen Lehrenzahnrades, und die Messeinheit beispielsweise zum Vergleichen des abgegriffenen Rundlaufs mit Referenzwerten.

Das Verstellelement ist vorteilhaft ein Zylinder, besonders vorteilhaft ein pneumatischer Zylinder, wie ein Gasdruckzylinder, wobei auch die Verwendung eines hydraulischen Zylinders oder eines elektrisch betätigbaren Aktuators denkbar ist. Vorteilhaft dient das Verstellelement dazu die Spindeleinheit aus deren Ruhelage bzw. Ruheposition in eine Einfahrposition zu bewegen bzw. auszulenken und vorteilhaft auch dazu die Spindeleinheit wieder aus der Einfahrposition in eine Eingriffsposition bzw. Messposition zu bewegen. Unterstützt wird hierbei das Verstellelement vorteilhaft von der Spindelhalterung, welche die Drehbewegung der Spindeleinheit um einen vorzugsweise frei beweglichen, das bedeutet nicht statischen Drehpunkt ermöglicht, so dass diese in unterschiedliche Positionen zu verfahren bzw. zu bewegen ist. Des Weiteren dient die Spindelhalterung vorteilhaft dazu die Abgriffsspindel und die Abgabespindel derart aufzunehmen, dass eine Rotationsbewegung der Abgriffsspindel um deren Abgriffsspindellängsachse ermöglicht und eine Übertragung von auf die Abgriffsspindel eingebrachten Auslenkungen und Bewegungen auf die Abgabespindel erfolgt. Vorteilhaft sind demnach die Abgriffsspindel und die Abgabespindel über die Spindelhalterung miteinander wirkverbunden, insbesondere um den ermittelten Rundlauf der Innenverzahnung ausgehend vom Lehrenzahnrad bis an die Messeinheit übergeben zu können. Vorteilhaft ist die Abgabespindel drehfest angeordnet, sodass ein nicht drehender Abgriff der Auslenkung der Spindeleinheit mittels der Messeinheit erfolgen kann. Es ist auch denkbar, dass die Abgriffsspindel zumindest abschnittsweise in der Abgabespindel aufgenommen ist, sodass die Abgabespindel einen Lagerabschnitt für die Abgriffsspindel umfasst. Vorteilhaft erstrecken sich beide Spindeln, sprich die Abgriffsspindel und die Abgabespindel koaxial zueinander. Die Abgriffsspindel ist vorteilhaft rotierend ausgestaltet und passt sich der Rotationsbewegung des Bauteiles, welches vorteilhaft eine Welle, besonders vorteilhaft eine Hohlwelle mit einer Innenverzahnung ist, an. Die Abgabespindel ist vorteilhaft verdrehsteif angeordnet und in der Spindelhalterung zumindest abschnittsweise eingepresst oder eingeklemmt. Das Lehrenzahnrad weist beispielsweise eine Evolventenverzahnung auf, durch welche ein prozesssicheres Eingreifen der Verzahnung des Lehrenzahnrades mit der zu vermessenden Innenverzahnung - weitestgehend unabhängig von der lagerichtigen Positionierung des Lehrenzahnrades in der Eingriffsposition - ermöglicht wird. Vorteilhaft ist das Lehrenzahnrad als kugelförmiges Lehrenzahnrad ausgebildet. Ein prozesssicherer kämmender Eingriff der Zähne der Verzahnung des Lehrenzahnrades in die Innenverzahnung wird hierdurch ermöglicht.

Die erfindungsgemäße Vorrichtung ist vorteilhaft dazu geeignet eine Rundlaufmessung einer Innenverzahnung eines Bauteiles, welche beispielsweise tief in einer Ausnehmung des Bauteils, wie einer Durchgangsbohrung einer Hohlwelle, angeordnet ist, zu messen, auch wenn diese Innenverzahnung selbst lediglich einen klein dimensionierten Durchmesser oder eine geringe axiale Erstreckung aufweist.

Im Rahmen der Erfindung ist es des Weiteren denkbar, dass die Vorrichtung zusätzlich ein Bauteilaufnahmesegment zum Aufnehmen des Bauteiles, insbesondere einer Welle aufweist, wobei das Bauteilaufnahmesegment zumindest zwei axial beabstandet zueinander ausgebildete Lagerelemente zur Lagerung und Ermöglichung einer Rotationsbewegung des Bauteiles um dessen Bauteillängsachse umfasst. Vorteilhaft ist es denkbar, dass wenigstens eines der Lagerelemente eine Lünette ist, wobei auch beide der Lagerelemente als Lünette ausgebildet sein können. Dabei finden beispielsweise Spannlünetten, Ringlünetten, Gleitlünette, offene Lünette usw. Anwendung. Es ist ebenfalls denkbar, dass wenigstens eines der Lagerelemente als Gleitlager oder Wälzlager ausgebildet ist. Vorteilhaft dient die Anordnung der Lagerelemente dazu das Bauteil in einer definierten Position zu halten und eine Drehbewegung bzw. Rotationsbewegung des Bauteils um dessen Bauteillängsachse, welche vorteilhaft parallel zur Spindeleinheitenlängsachse ausgerichtet ist, zu ermöglichen.

Es ist des Weiteren denkbar, dass das Bauteilaufnahmesegment eine Antriebseinheit zum rotatorischen Antreiben des Bauteiles um dessen Bauteillängsachse aufweist. Demzufolge ist es denkbar, dass die Antriebseinheit ein mit dem Bauteil, insbesondere einer Welle verbundener elektrischer Motor ist, dessen Rotor mit dem Bauteil zum Antreiben dieses Bauteils wirkverbunden ist.

Im Rahmen der Erfindung ist es ebenfalls denkbar, dass die Spindelhalterung eine Spindelhalterungsauflage wenigstens zum Aufnehmen der Abgriffsspindel und der Abgabespindel und einen Spindelhalterungsfuß zum Bewegen, insbesondere zum Auslenken der Spindeleinheit aufweist. Es ist denkbar, dass die Spindelhalterungsauflage in Form einer Hülse ausgebildet ist. Die Abgriffsspindel erstreckt sich vorteilhaft in eine Öffnung der Hülse hinein, während die Abgabespindel sich in eine andere Öffnung der Hülse hinein streckt. Auch ist es möglich, dass die Spindelhalterungsauflage in Gestalt eines Quaders mit einer Bohrung, insbesondere einer Durchgangsbohrung zur Aufnahme der Abgriffsspindel und der Abgabespindel ausgebildet ist. Vorteilhaft überträgt die Spindelhalterungsauflage kein Drehmoment, welches von der Abgriffsspindel in diese eingeleitet wird, sondern im Wesentlichen ein Kippmoment, also eine Drehbewegung um einen Drehpunkt bzw. eine Drehachse im Bereich der mittelbaren oder unmittelbaren Verbindung zwischen Abgriffsspindel und Abgabespindel aufliegend auf der Spindeleinheitenlängsachse aufgrund einer Auslenkung der Abgriffsspindel in vertikaler Richtung.

Ebenfalls ist es möglich, dass der Spindelhalterungsfuß zumindest eine auslenkbare oder wenigstens abschnittsweise biegbare, insbesondere zumindest abschnittsweise elastisch verformbare oder um eine Drehachse drehbare Konstruktion umfasst. Es ist demnach denkbar, dass der Spindelhalterungsfuß auch mehr als eine der Ausgestaltungen, insbesondere zwei oder alle drei Ausgestaltungen aufweist und folglich auslenkbar und drehbar oder biegbar und drehbar oder biegbar und auslenkbar oder auslenkbar, biegbar und drehbar ausgestaltet ist. Die Ausgestaltung des Spindelhalterungsfußes, insbesondere dessen Funktionalität ist im Wesentlichen abhängig von den verwendeten Materialien und Bauteilen. So ist es beispielsweise möglich den Spindelhalterungsfuß in Form eines Wippengelenkes, vorteilhaft eines Kugelgelenkes auszugestalten, um welchen sich die Spindeleinheit, welche dann als Wippe agiert, dreht bzw. kippt. Das Wippengelenkt dient vorteilhaft auch dazu eine definierte Anpresskraft des Lehrenzahnrades auf die Innenverzahnung des Bauteiles zu ermöglichen.

Es ist ebenfalls denkbar, dass der Spindelhalterungsfuß eine Hebelarmkonstruktion mit in einer sich in axialer Richtung der Spindeleinheitenlängsachse erstreckenden Ebene zueinander kreuzenden Tragstangen umfasst. Vorteilhaft sind zwei Ebenen aufgespannt, welche sich jeweils in axialer Richtung entlang der Spindeleinheitenlängsachse und orthogonal dazu in vertikaler Richtung aufspannen. Beide Ebenen sind parallel zueinander ausgebildet und orthogonal zur Spindeleinheitenlängsachse in horizontaler Richtung betrachtet beabstandet voneinander. In Beiden Ebenen sind vorteilhaft jeweils zwei sich kreuzende Tragstangen angeordnet.

Vorteilhaft ist es denkbar, dass wenigstens eine der Tragstangen des Spindelhalterungsfußes ein Federgelenk umfasst. Dieses Federgelenk dient vorteilhaft dazu eine elastische Verbiegung bzw. Deformierung der Tragstange in einem definierten Bereich zu ermöglichen. Aufgrund der Verbiegung der Tragstange wird auch eine Kippbewegung der Spindeleinheit um einen definierten Drehpunkt ermöglicht, um die Spindeleinheit beispielsweise aus deren Ruheposition in eine Einfahrposition zu bewegen. Vorteilhaft weist folglich pro Ebene eine Tragstange ein entsprechendes Federelement auf. Auch ist es denkbar, dass alle Tragstangen ein Federelement aufweisen. Das Federelement der Tragstangen dient beispielsweise auch dazu eine definierte Anpresskraft des Lehrenzahnrades auf die Innenverzahnung des Bauteils zu ermöglichen. Die Tragstangen erstrecken sich vorteilhaft zwischen der Spindelhalterungsauflage und einem vertikal zur Spindelhalterungsauflage beabstandet angeordnetem Bodenelement, welches vorteilhaft als ein auf Linearschienen angeordneter Schlitten ausgebildet ist. Auch ist es denkbar, dass die Tragstangen pro Ebene als V-Form ausgebildet sind und die V-Form Spitze in einem Kugelgelenk oder Kippgelenk verläuft. Hierdurch wird ein Verkippen der Spindelhalterungsauflage ermöglicht. Ebenfalls ist es denkbar, dass eine der Tragstangen pro Ebene eine V-Form aufweist, während die zweite der Tragstangen pro Ebene eine umgekehrte V-Form aufweist, wobei beide Tragstangen pro Ebene vertikal übereinander angeordnet sind und deren V-Form Spitzen in einem gemeinsamen Gelenk fluchten. Sofern benötigt können auch an den V-Form Enden die Tragstangen in entsprechende eine definierte Bewegung zulassende Lagerungen eingebracht sein. Als Bewegungen sind beispielsweise Dreh-, Kipp oder Schwenkbewegungen oder translatorische Bewegungen zu verstehen.

Im Rahmen der Erfindung ist es ebenfalls denkbar, dass der Spindelhalterungsfuß als Messschlitten ausgestaltet ist.

Es ist alternativ denkbar, dass der Spindelhalterungsfuß eine Blechschnittkonstruktion mit sich in einer Kreuzungsachse kreuzenden Blechschnitten ist, wobei die Kreuzungsachse sich horizontal und orthogonal zur Spindeleinheitenlängsachse erstreckt. Die Kreuzungsachse ist vorteilhaft eine virtuelle Achse, welche keine tatsächliche Verbindung zwischen den Blechschnitten erzeugt. Vorteilhaft erstreckt sich hierbei ein Blechschnitt durch eine Öffnung des anderen Blechschnittes hindurch. Die Blechschnitte sind beispielsweise derart geformt, dass deren Fläche sich orthogonal zur Spindeleinheitenlängsachse in horizontaler Richtung betrachtet sowie in einer abgeschrägten vertikalen Richtung verlaufend, erstreckt. Vorteilhaft ist wenigstens einer der Blechschnitte ein Federstahlelement und weist folglich eine definierte elastische Verformbarkeit, insbesondere Deformierbarkeit auf. Diese elastische Verformbarkeit dient dazu eine Kippbewegung der Spindeleinheit um einen vorzugsweise nicht statischen, insbesondere vorhersehbaren virtuellen Drehpunkt zu ermöglichen, um die Spindeleinheit, insbesondere das Lehrenzahnrad, beispielsweise aus deren Ruheposition in eine Einfahrposition zu bewegen.

Es ist, wie bereits erwähnt, denkbar, dass die Spindelhalterung auf einem in axialer Richtung entlang einer Längsachse der Spindeleinheit, insbesondere der Spindeleinheitenlängsachse verfahrbaren Schlitten angeordnet ist. Vorteilhaft ist der Schlitten in bzw. auf Linearschienen gleitend oder auch rollend angeordnet. Die Linearschienen sind dabei ebenfalls entlang der Spindeleinheitenlängsachse ausgerichtet und erstrecken sich demnach parallel zu dieser Spindeleinheitenlängsachse. Mittels des Schlittens ist insbesondere eine Ausrichtung bzw. Verschiebung der Spindeleinheit entlang der Spindeleinheitenlängsachse denkbar, insbesondere relativ zu der Messeinheit und/oder dem Verstellelement.

Alternativ oder zusätzlich ist es möglich, dass das Ermittlungssegment oder das Bauteilaufnahmesegment auf einem in einem, vorteilhaft zwei, drei oder mehr, besonders vorteilhaft in sechs Freiheitsgraden stufenlos beweglichen Haltetisch angeordnet ist. Mittels des Haltetisches ist es möglich das gesamte Ermittlungssegment relativ zum Bauteilaufnahmesegment oder das Bauteilaufnahmesegment relativ zum Ermittlungssegment frei zu bewegen, um ein Einbringen des Lehrenzahnrades in eine Ausnehmung des Bauteiles mit der zu messenden Innenverzahnung einzubringen. Es ist auch ebenfalls denkbar, dass sowohl das Ermittlungssegment als auch das Bauteilaufnahmesegment auf einem entsprechend ausgebildeten Haltetisch aufgenommen sind.

Im Rahmen der Erfindung ist es des Weiteren möglich, dass das Verstellelement und die Messeinheit an der Abgabespindel, vorteilhaft an einem axialen Ende der Abgabespindel angeordnet und mit der Abgabespindel wirkverbunden sind. Hierbei handelt es sich vorteilhaft um das axiale Ende der Abgabespindel, welches dem axialen Ende der Abgabespindel gegenüberliegt, welches mit der Spindelhalterung, insbesondere der Spindelhalterungsauflage verbunden, insbesondere wirkverbunden ist.

Das erfindungsgemäße Verfahren zur Rundlaufmessung einer Innenverzahnung eines Bauteils, insbesondere einer Welle erfolgt erfindungsgemäß mittels einer Vorrichtung zur Rundlaufmessung einer Innenverzahnung eines Bauteils, wie zuvor aufgeführt. Das erfindungsgemäße Verfahren weist dabei zumindest die nachfolgenden Schritte in entsprechender Reihenfolge auf:
a) Betätigen des Verstellelementes zur Auslenkung der Spindeleinheit derart, dass das Lehrenzahnrad von einer Ruheposition in eine Einfahrposition bewegt wird,
b) Einbringen des Lehrenzahnrades in eine die zu vermessende Innenverzahnung aufweisende Ausnehmung des Bauteiles,
c) erneutes Betätigen des Verstellelementes zur erneuten Auslenkung der Spindeleinheit derart, dass das Lehrenzahnrad von einer Einfahrposition in eine Eingriffsposition bewegt wird, in welcher das Lehrenzahnrad in zumindest abschnittsweise kämmenden Eingriff mit wenigstens einem Abschnitt der Innenverzahnung gelangt,
d) Antreiben des Bauteiles zur Erzeugung einer Drehbewegung des Bauteiles um dessen Bauteillängsachse, und
e) Erfassen des Rundlaufs der Innenverzahnung mittels des Lehrenzahnrades.

Beim Betätigen des Verstellelementes wird vorteilhaft dieses Verstellelement aktiviert oder deaktiviert, wodurch die Spindeleinheit um einen insbesondere virtuellen, vornehmlich nicht statischen oder auch definierten und festen Drehpunkt gekippt bzw. gedreht wird, sodass auch folglich die Spindeleinheit aus einer Ruheposition in eine Einfahrposition bewegt wird. Das Lehrenzahnrad wird hierbei beispielsweise in vertikaler Richtung bewegt. Die Einfahrposition des Lehrenzahnrades entspricht einer Position, in welcher eine Kollision des Lehrenzahnrades mit einer Wandung des Bauteiles beim Einbringen des Lehrenzahnrades in die Ausnehmung mit der Innenverzahnung vermieden wird. Es ist denkbar, dass das Bauteil und folglich das Bauteilaufnahmesegment auf die Spindeleinheit mit dem Lehrenzahnrad und folglich auf das Ermittlungssegment zubewegt wird oder das Ermittlungssegment auf das Bauteilaufnahmesegment zubewegt wird oder beide Segmente, sprich das Bauteilaufnahmesegment und das Ermittlungssegment gemeinsam aufeinander zu bewegt werden können, um ein Einbringen des Lehrenzahnrades in die Ausnehmung mit der Innenverzahnung zu ermöglichen. Ist das Lehrenzahnrad in die Ausnehmung des Bauteils mit der zu messenden Innenverzahnung eingebracht worden, findet eine erneute Betätigung des Verstellelementes statt. Demnach ist es möglich, dass das Verstellelement aktiviert oder deaktiviert wird. Hierdurch wird die Spindeleinheit erneut derart ausgelenkt, dass das Lehrenzahnrad von einer Einfahrposition in eine Eingriffsposition, in welcher die Zähne des Lehrenzahnrades in kämmenden Eingriff mit der Innenverzahnung gelangen, gebracht wird.

Demzufolge ist es des Weiteren denkbar, dass vor dem Schritt a), nämlich dem erstmaligen Betätigen des Verstellelementes oder zwischen den Schritten a) und b), nämlich vor dem Einbringen des Lehrenzahnrades in die eine zu messende Innenverzahnung aufweisende Ausnehmung eines Bauteiles, das Bauteil in ein Bauteilaufnahmesegment eingebracht und derart zum Ermittlungssegment ausgerichtet wird, dass die Längsachse des Bauteils und die unausgelenkte Spindeleinheitenlängsachse miteinander fluchten oder sich zumindest parallel zueinander erstrecken. Vorteilhaft wird hierdurch das Bauteil in eine geeignete Position zur Messung des Rundlaufes der Innenverzahnung gebracht.

Um den Rundlauf der Innenverzahnung zu erfassen, wird das Bauteil, welches beispielsweise eine Welle ist, in Drehung bzw. Rotation um dessen Bauteillängsachse versetzt. Als Längsachse des Bauteiles wird im Rahmen der Erfindung diejenige Achse des Bauteiles verstanden, entlang welcher sich die Ausnehmung des Bauteiles erstreckt, innerhalb welcher die zu messende Innenverzahnung ausgebildet ist. Während der Drehung des Bauteiles um dessen Längsachse wird folglich auch das mit der Innenverzahnung in kämmendem Eingriff angeordnete Lehrenzahnrad in Drehung um dessen Drehachse versetzt, welche der Spindeleinheitenlängsachse entspricht. Im Bereich von Rundlauffehlern der Innenverzahnung des Bauteils wird das Lehrenzahnrad und folglich die mit dem Lehrenzahnrad verbundene Abgriffsspindel im Wesentlichen vertikal ausgelenkt, das bedeutet aus der vorherrschenden Eingriffsposition in vertikaler Richtung verschoben bzw. bewegt.

Vorteilhaft wird nach dem Schritt e) in einem Schritt f) der erfasste Rundlauf von dem Lehrenzahnrad und der mit dem Lehrenzahnrad verbundenen Abgriffsspindel auf die Abgabespindel derart übertragen wird, dass die mit der Abgabespindel wirkverbundene Messeinheit Abweichungen des Rundlaufes detektiert. Das bedeutet, dass diese Auslenkung von der Abgriffsspindel auf die Abgabespindel übertragen wird, da beide Spindeln zumindest über die Spindelhalterung, insbesondere die Spindelhalterungsauflage miteinander wirkverbunden sind. Demnach erfährt folglich auch die Abgabespindel eine Auslenkung, welche diese dann auf die Messeinheit überträgt. Die Messeinheit erfasst diese Auslenkung als Abweichung des Rundlaufes. Ob diese Abweichung des Rundlaufs Werte aufweist, welche innerhalb erlaubter Grenzen liegen, kann die Messeinheit beispielsweise mittels einer Vergleichseinheit ermitteln. Die Vergleichseinheit kann mit der Messeinheit datenübertragungstechnisch verbunden sein und folglich ein separat zur Messeinheit ausgebildetes Bauteil sein. Auch ist es denkbar, dass die Vergleichseinheit ein Bestandteil der Messeinheit ist. Die Vergleichseinheit gleicht die detektierten Werte der Rundlaufmessung mit Referenzwerten ab, um Abweichungen des Rundlaufs der Innverzahnung ermitteln zu können.

Bei dem beschriebenen Verfahren ergeben sich sämtliche Vorteile, die bereits zu der Vorrichtung zur Rundlaufmessung einer Innenverzahnung gemäß dem ersten Aspekt der Erfindung beschrieben worden sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsformen einer erfindungsgemäßen Vorrichtung zur Rundlaufmessung einer Innenverzahnung sowie Schritte des erfindungsgemäßen Verfahrens zur Rundlaufmessung einer Innenverzahnung werden nachfolgend anhand von Zeichnungen näher erläutert. Es zeigen jeweils schematisch:
- Figur 1: in einer seitlichen Schnittdarstellung eine Ausführungsform einer erfindungsgemäßen Vorrichtung zur Rundlaufmessung mit einem in Ruheposition befindlichen Lehrenzahnrad,
- Figur 2: in einer perspektivischen Ansicht die in der Figur 1 gezeigte Ausführungsform einer erfindungsgemäßen Vorrichtung,
- Figur 3: in einer seitlichen Schnittdarstellung die in den Figuren 1 und 2 gezeigte Ausführungsform einer erfindungsgemäßen Vorrichtung zur Rundlaufmessung mit einem in Einfahrposition befindlichen Lehrenzahnrad,
- Figur 4: in einer perspektivischen Ansicht die in der Figur 3 gezeigte Ausführungsform einer erfindungsgemäßen Vorrichtung,
- Figur 5: in einer seitlichen Schnittdarstellung die in den Figuren 1 bis 4 gezeigte Ausführungsform einer erfindungsgemäßen Vorrichtung zur Rundlaufmessung mit einem in Eingriffsposition befindlichen Lehrenzahnrad,
- Figur 6: in einer seitlichen Schnittdarstellung die in den Figuren 1 bis 5 gezeigte Ausführungsform einer erfindungsgemäßen Vorrichtung zur Rundlaufmessung mit einem in Einfahrposition befindlichen Lehrenzahnrad,
- Figur 7: in einer seitlichen Schnittdarstellung die in den Figuren 1 bis 6 gezeigte Ausführungsform einer erfindungsgemäßen Vorrichtung zur Rundlaufmessung mit einem in Eingriffsposition befindlichen Lehrenzahnrad,
- Figur 8: in einer seitlichen Schnittdarstellung eine weitere Ausführungsform einer erfindungsgemäßen Vorrichtung zur Rundlaufmessung mit einem in Eingriffsposition befindlichen Lehrenzahnrad,
- Figur 9: in einer Querschnittsdarstellung ein Schnitt A-A der in der Figur 7 gezeigten Ausführungsform einer erfindungsgemäßen Vorrichtung zur Rundlaufmessung mit einer Ausführungsform eines in Eingriffsposition befindlichem Lehrenzahnrad,
- Figur 10: in einer perspektivischen Ansicht die in der Figur 9 gezeigte Ausführungsform eines Lehrenzahnrades,
- Figur 11: in einer Querschnittsdarstellung die in der Figur 10 gezeigte Ausführungsform eines Lehrenzahnrades,
- Figur 12: Schnitt B -B des Lehrenzahnrades gemäß Figur 11,
- Figur 13: in einer Querschnittsdarstellung ein Schnitt A-A der in der Figur 7 gezeigten Ausführungsform einer erfindungsgemäßen Vorrichtung zur Rundlaufmessung mit einer weiteren Ausführungsform eines in Eingriffsposition befindlichem Lehrenzahnrad,
- Figur 14: in einer perspektivischen Ansicht die in der Figur 13 gezeigte Ausführungsform eines Lehrenzahnrades,
- Figur 15: in einer Querschnittsdarstellung die in der Figur 14 gezeigte Ausführungsform eines Lehrenzahnrades, und
- Figur 16: Schnitt C - C des Lehrenzahnrades gemäß Figur 15.

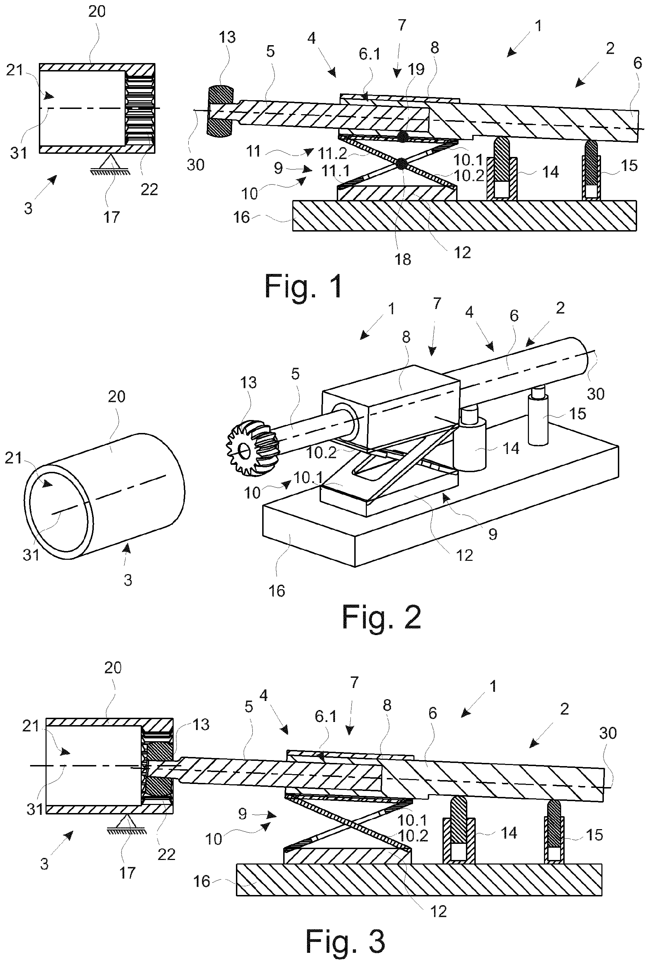

Elemente mit gleicher Funktion und Wirkungsweise sind in den Fig. 1 bis 16 jeweils mit denselben Bezugszeichen versehen.

In den Figuren 1 bis 7 ist eine Ausführungsform der erfindungsgemäßen Vorrichtung 1 zur Rundlaufmessung einer Innenverzahnung 22 eines Bauteils 20, wie einer hier gezeigten Welle, dargestellt. Die Vorrichtung 1 umfasst ein Ermittlungssegment 2 sowie ein Bauteilaufnahmesegment 3. Das Ermittlungssegment 2 weist eine Spindeleinheit 4 auf, welche eine Abgriffsspindel 5 sowie eine Abgabespindel 6 umfasst. Die Abgriffsspindel 5 ist drehbar um die Spindeleinheitenlängsachse 30 in der Spindelhalterung 7, insbesondere in der Spindelhalterungsauflage 8 angeordnet bzw. aufgenommen. Hierfür ist es denkbar, dass die Spindelhalterungsauflage 8 ein Lagerelement, wie ein Gleitlager ein Wälzlager oder eine Lünette umfasst (hier nicht gezeigt). Es ist jedoch auch möglich, dass die Abgriffsspindel 5 zumindest abschnittsweise, wie in den Figuren 1, 3, 5, 6 und 7 sichtbar, drehbar in der Abgabespindel 6 angeordnet ist. Demnach bildet die Abgabespindel 6 einen Lagerabschnitt 6.1 zur Lagerung der drehbaren Abgabespindel 5 aus. Die Spindelhalterungsauflage 8 ist vorteilhaft in geometrischer Gestalt eines Quaders ausgebildet, kann jedoch auch eine zylindrische Gestalt aufweisen. Relevant für die Spindelhalterungsauflage 8 ist zumindest die Ausgestaltung von entweder einer Durchgangsbohrung oder einer oder mehreren Ausnehmungen oder Vertiefungen, mittels welcher eine Anordnung der Spindeln, insbesondere der Abgriffsspindel 5 und der Abgabespindel 6 ermöglicht wird. Vorteilhaft ist in einem Abschnitt einer derartigen Bohrung, insbesondere der Durchgangsbohrung oder durchgängigen Ausnehmung oder in einer der Ausnehmungen das Lagerelement zur Lagerung der rotierbaren Abgriffsspindel 5 angeordnet. Die Abgabespindel 6 ist vorteilhaft verdrehsteif mit der Spindelhalterungsauflage 8 verbunden. Vorteilhaft ist die Abgabespindel 6 in die Spindelhalterungsauflage 8, insbesondere in eine entsprechend dafür vorgesehene Ausnehmung eingeklemmt oder eingepresst oder in andere kraftschlüssiger, formschlüssiger oder stoffschlüssiger Weise mit der Spindelhalterungsauflage 8 verbunden. An einem distalen Ende oder einem axialen Ende der Abgriffsspindel 5 ist ein Lehrenzahnrad 13 angeordnet. Dieses axiale Ende liegt dem axialen Ende der Abgriffsspindel 5 gegenüber, mit welchen diese mit der Spindelhalterungsauflage 8 verbunden ist. Vorteilhaft wurde das Lehrenzahnrad 13 auf die Abgriffsspindel 5 aufgepresst. Es ist jedoch auch denkbar, dass das Lehrenzahnrad 13 mit der Abgriffsspindel 5 in anderer formschlüssiger, kraftschlüssiger oder gar stoffschlüssiger Weise verbunden ist. Die Spindelhalterungsauflage 8 ist mit dem Spindelhalterungsfuß 9 der Spindelhalterung 7 verbunden. Der Spindelhalterungsfuß 9 weist beispielsweise sich kreuzende Blechschnitte 10, insbesondere zwei sich kreuzende Blechschnitte 10.1 und 10.2 oder in zwei Ebenen jeweils angeordnete sich kreuzende Tragstangen 11, insbesondere zwei sich kreuzende Tragstangen 11.1 und 11.2 auf. Bei der Verwendung von zwei sich kreuzenden Blechschnitten 10 erstreckt sich einer der Blechschnitte 10, beispielsweise der erste Blechschnitt 10.1 durch eine hier nicht dargestellte Öffnung des anderen, insbesondere zweiten Blechschnittes 10.2. Vorteilhaft ist wenigstens einer der Blechschnitte 10, besonders vorteilhaft der erste Blechschnitt 10.1 und vorteilhaft auch beide Blechschnitte 10 elastisch federnde Blechschnitte 10, welche beispielsweise aus einem Federstahl hergestellt sind. Die Blechschnitte 10 erstrecken sich jeweils in einer Ebene, die sich zum einen orthogonal zur Spindeleinheitenlängsachse 30 und zum anderen in vertikaler Richtung auffächert. Die Blechschnitte 10 selbst verlaufen in dieser Ebene in einem definierten Winkel schräg vertikal

Bei der Ausgestaltung von Tragstangen 11 als Spindelhalterungsfuß 9, anstelle einer Blechschnittkonstruktion 10, wie beispielhaft schematisch in der Figur 1 angedeutet, sind in jeder Ebene, von insgesamt mindestens zwei Ebenen, wobei hier nur eine der Ebenen sichtbar ist, zwei Tragstangen 11.1 bzw. 11.2 angeordnet. Die Tragstangen 11.1 und 11.2 pro Ebene kreuzen sich in einem Kupplungspunkt bzw. Drehpunkt 18. Die Tragstangen 10 erstrecken sich in einem definierten Winkel schräg vertikal zwischen der Spindelhalterungsauflage 8 und einem Bodenelement, wie beispielsweise einem in den Figuren 1 bis 7 gezeigten Schlitten 12. Vorteilhaft weist wenigstens eine der Tragstangen 11 pro Ebene, besonders vorteilhaft die erste Tragstange 11.1 oder auch beide Tragstangen 11.1 und 11.2 ein Federgelenk auf, um eine elastische Biegung bzw. Deformierung der Tragstangen 11 und folglich eine Auslenkung der Spindeleinheit 4 um eine sich im Wesentlichen kontinuierlich bei der Bewegung der Vorrichtung 1 anpassenden Drehachse 19 zu ermöglichen. Auch ist es denkbar, dass im Drehpunkt 18 ein Gelenk ausgebildet ist, um welches zumindest ein oberer V-förmig ausgebildeter Teil der Tragstangen 11 gedreht bzw. gekippt werden kann. Hierfür ist auch ein unterer Teil der Tragstangen 11 als umgekehrtes V ausgebildet, sodass sich die beiden Tragstangenabschnitte in dem Drehpunkt 18 treffen. In dieser Ausgestaltung ist es denkbar, dass die Drehachse 19 als starre, das bedeutet unbewegliche Drehachse ausgebildet ist.

Aufgrund einer Verschiebung des Schlittens 12 entlang der Spindeleinheitenlängsachse 30 wird auch die gesamte Spindelhalterung 7 verschoben. Diese Verschiebung ermöglicht eine Justierung oder Einstellung der gewünschten bzw. erforderlichen Drehachse 19 (wie in Figur 1 gezeigt) der Spindeleinheit 4 bei deren Auslenkung. Auch kann durch das Verfahren des Schlittens 12 vorteilhaft der Ausschlag bzw. die Auslenkung der Abgabespindel 6 eingestellt bzw. justiert werden. Der Schlitten 12 läuft vorteilhaft in hier nicht gezeigten Linearschienen, welche sich ebenfalls entlang der Spindeleinheitenlängsachse 30 erstrecken.

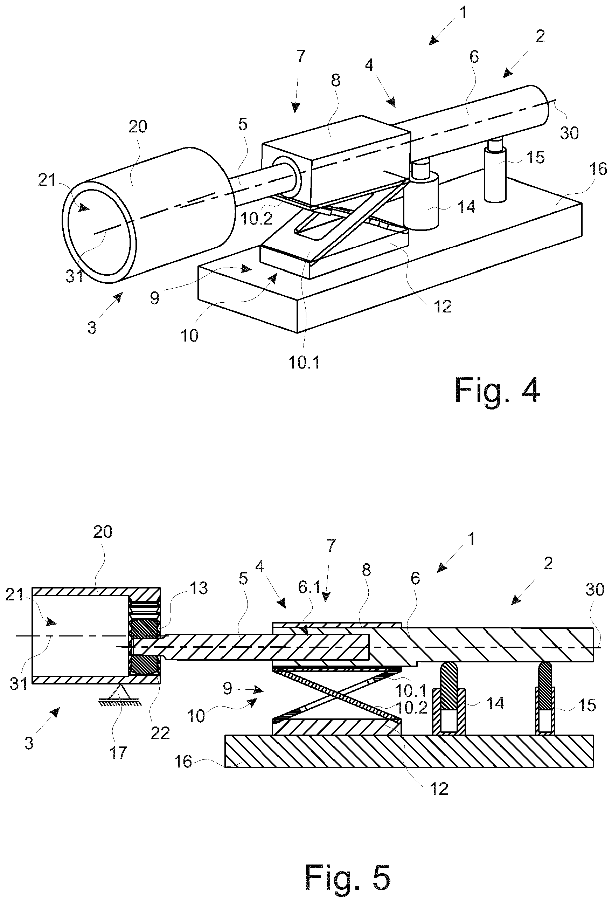

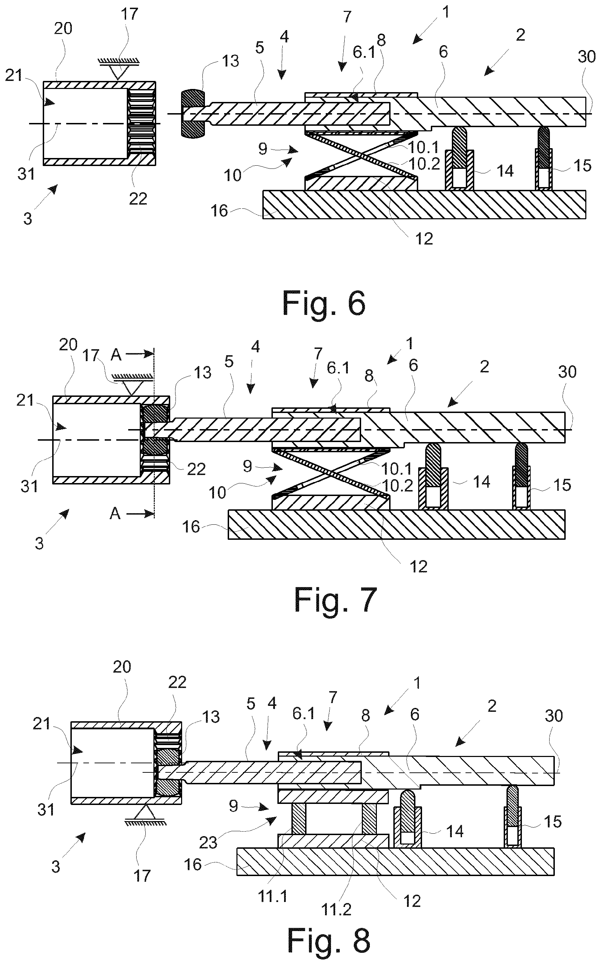

Des Weiteren weist das Ermittlungssegment 2 ein Verstellelement 14 sowie eine Messeinheit 15 auf, die jeweils mit der Abgabespindel 6 wirkverbunden sind. Das Verstellelement 14 ist beispielsweise ein Zylinder, wie ein pneumatischer Druckzylinder und dient dazu eine Auslenkung der Spindeleinheit 4 und folglich des mit dieser Spindeleinheit 4 verbundenen Lehrenzahnrades 13 aus einer Ruheposition, wie in den Figuren 1 und 2 oder 6 gezeigt, in eine Einfahrposition, wie in den Figuren 3 und 4 gezeigt, und von einer Einfahrposition in eine Eingriffsposition, wie in den Figuren 5 und 7 gezeigt, zu bewegen. Die Messeinheit 15 ist beispielsweise ein Messtaster, welcher die ausgehend von dem Lehrenzahnrad 13 über die Abgriffsspindel 5 an die Abgabespindel 6 übertragenen Auslenkungen bei der Messung des Rundlaufes der Innenverzahnung 22 des Bauteils 20 detektiert. Es ist denkbar, dass die Messeinheit 15 und das Verstellelement 14, wie in den Figuren 1 bis 7 gezeigt auf einem Haltetisch 16 angeordnet sind. Der Haltetisch 16 ist vorzugsweise in Richtung der Spindellängsachse 30 verschiebbar. Besonders vorteilhaft ist der Haltetisch 16 in mehr als einem Freiheitsgrad bewegbar, sondern kann auch zusätzlich in horizontaler Richtung, orthogonal zur Spindeleinheitenlängsachse und/oder vertikal verfahren und/oder gekippt, insbesondere nach vorn gekippt und/oder seitlich verkippt werden. Es ist denkbar, dass der Schlitten 12 auf dem Haltetisch 16 angeordnet ist und vorteilhaft auf diesem in Spindeleinheitenlängsrichtung 30 verfahrbar ist.

Die Vorrichtung 1 weist gemäß der Figuren 1 bis 7 auch ein Bauteilaufnahmesegment 3 auf, welches dazu dient das Bauteil 20 aufzunehmen und in einer definierten Position zu halten, vorteilhaft dieses um dessen Bauteillängsachse 31 zu drehen. Das Bauteilaufnahmesegment 3 weist wenigstens ein Lagerelement 17, vorteilhaft zwei in Richtung der Bauteillängsachse 31 betrachtet beabstandet zueinander ausgebildete Lagerelemente 17 auf, um eine hinreichend prozesssichere Lagerung des Bauteils 20 zu ermöglichen.

Wie in den Figuren 1 und 2 sowie 6 gezeigt, befindet sich die Spindeleinheit 4 und demnach das Lehrenzahnrad 13 in einer Ruheposition. In dieser Position ist die Spindeleinheit 4 nicht ausgelenkt und das Lehrenzahnrad 13 befindet sich nicht in Eingriff mit der zu messenden Innenverzahnung 22 des Bauteils 20. In der Figuren 3 und 4 hingegen wurde durch eine Betätigung des Verstellelementes 14, das bedeutet durch eine Aktivierung oder Deaktivierung des Verstellelementes 13 (je nachdem welches Werkzeug als Verstellelement gewählt wird), die Spindeleinheit 4 ausgelenkt, das bedeutet um eine vorzugsweise nicht starre Drehachse 19, wie in Figur 1 schematisch gezeigt, bewegt bzw. geschwenkt. Hierdurch wird das Lehrenzahnrad 13 im Wesentlichen in vertikaler Richtung nach oben bewegt, insbesondere angehoben. Nachdem eine Auslenkung der Spindeleinheit 4 erfolgt ist, wird vorteilhaft der Haltetisch 16 aktiviert um eine Bewegung entlang der Spindeleinheitenlängsachse 30 in Richtung des Bauteilaufnahmesegmentes 2 auszuführen. Hierdurch wird das Lehrenzahnrad 13 in eine Ausnehmung 21 des Bauteiles 20, in welcher die zu messende Innenverzahnung 22 ausgebildet ist, eingebracht. Nach dem Positionieren des Lehrenzahnrades 13 in einer Einfahrposition und dem Einbringen dieses Lehrenzahnrades 13 in die Ausnehmung 21 des Bauteiles 20, wie in den Figuren 3 und 4 gezeigt, erfolgt eine erneute Auslenkung der Spindeleinheit 4. Diese erneute Auslenkung der Spindeleinheit 4 wird wiederum vom Verstellelement 14 erwirkt, welches - je nach Werkzeugausführung - aktiviert oder deaktiviert wird. Bei der erneuten Auslenkung wird die Spindeleinheit 4 und folglich das Lehrenzahnrad 13 von der Einfahrposition in eine Eingriffsposition, wie in den Figuren 5 und 7 gezeigt, bewegt. Hierbei findet folglich wieder eine Bewegung, insbesondere Verkippung der Spindeleinheit um die nicht statische Drehachse 19, wie in Figur 1 schematisch gezeigt, statt, wodurch das Lehrenzahnrad 13 in vertikaler Richtung nach unten bewegt wird. Nach ausgeführter Bewegung greift vorteilhaft das Lehrenzahnrad 14 mit dessen Zähnen kämmend in einen Abschnitt der Innenverzahnung 22 des Bauteils 20 ein, wie auch in den Figuren 5 und 7 sowie in den nachfolgenden Figuren 8, 9 und 13 gezeigt.

Es ist denkbar, dass das Lehrenzahnrad 13 derart in Eingriff mit der Innenverzahnung 22 des Bauteiles 20 gebracht wird, dass es durch dessen Gewichtskraft alleine oder vorteilhaft in Kombination mit der Federkraft des Spindelhalterungsfußes 9 auf einem unteren Bereich der Innenverzahnung 22 - in vertikaler Richtung betrachtet - aufliegt, um eine erforderliche Anpresskraft aufzuweisen Dies ist insbesondere der Figur 5 zu entnehmen. Eine Alternative dazu ist in der Figur 7 gezeigt. In dieser Ausgestaltung wird das Lehrenzahnrad 13 derart in Eingriff mit der Innenverzahnung 22 des Bauteiles 20 gebracht wird, dass es in einen oberen Bereich der Innenverzahnung 22 - in vertikaler Richtung betrachtet - eingreift. Hierfür ist es erforderlich einen entsprechenden Anpressdruck zu erzeugen. Die hierfür erforderliche Anpresskraft des Lehrenzahnrades 13 wird beispielsweise mittels der Spindelhalterung 7, insbesondere des Spindelhalterungsfußes 9 in wirksamer Zusammenarbeit mit dem Verstellelement 14, welches eine definierte Zugkraft auf die Spindeleinheit 4 und folglich die Abgabespindel 6 ausüben kann, erzeugt. Wie auch in der Anordnung des Lehrenzahnrades 13 im unteren Bereich der Innenverzahnung 22, bedarf es vor dem Aufbringen des Lehrenzahnrades 13 eine Auslenkung bzw. Schwenkung der Spindeleinheit 4 aus einer Ruheposition, wie in der Figur 6 gezeigt. Zudem ist es möglich auch den gesamten Haltetisch 16 in vertikaler Richtung nach oben zu fahren, um ein prozesssicheres Eingreifen des Lehrenzahnrades 12 in die Innenverzahnung 22 zu ermöglichen. Des Weiteren ist es vorteilhaft, wenn das Lagerelement 17 oberhalb des angeordneten Bauteiles 20 angeordnet ist, um einen definierten Gegendruck beim Aufbringen des Anpressdruckes durch das Lehrenzahnrad 13 auf die Innenverzahnung 22 zumindest während des Messvorganges zu ermöglichen. Das Lagerelement 17 kann als Lünette ausgebildet sein.

Es ist demnach anzumerken, dass es für die Ermittlung des Rundlaufes einer Innenverzahnung 22 und insbesondere die Detektion von Rundlauffehlern dieser Innenverzahnung 22 eines Bauteiles 20 nicht relevant ist, in welchem Abschnitt der Innenverzahnung 22 - in Umfangsrichtung betrachtet - das Lehrenzahnrad 13 in kämmenden Eingriff mit der Innenverzahnung 22 gebracht wird.

In der Figur 8 ist eine weitere Ausführungsform der erfindungsgemäßen Vorrichtung 1 gezeigt. Diese Ausführungsform unterscheidet sich von der in den Figuren 1 bis 7 gezeigten Ausführungsform durch einen abweichend ausgebildeten Spindelhalterungsfuß 9. Der in der Figur 8 gezeigte Spindelhalterungsfuß 9 ist vorteilhaft als Messschlitten 23 ausgeführt. Vorteilhaft kann dessen Messspitze das Lehrenzahnrad 13 aufnehmen. Der Messschlitten kann ebenfalls Tragstangen 11.1 und 11.2 umfassen, die jedoch parallel zueinander angeordnet sind. Mittels dieser Tragstangen 11.1 und 11.2 ist vorteilhaft auch eine Verstellung bzw. Justierung und Positionierung der Spindeleinheit 4 relativ zu der zu vermessenden Innenverzahnung 22 denkbar..

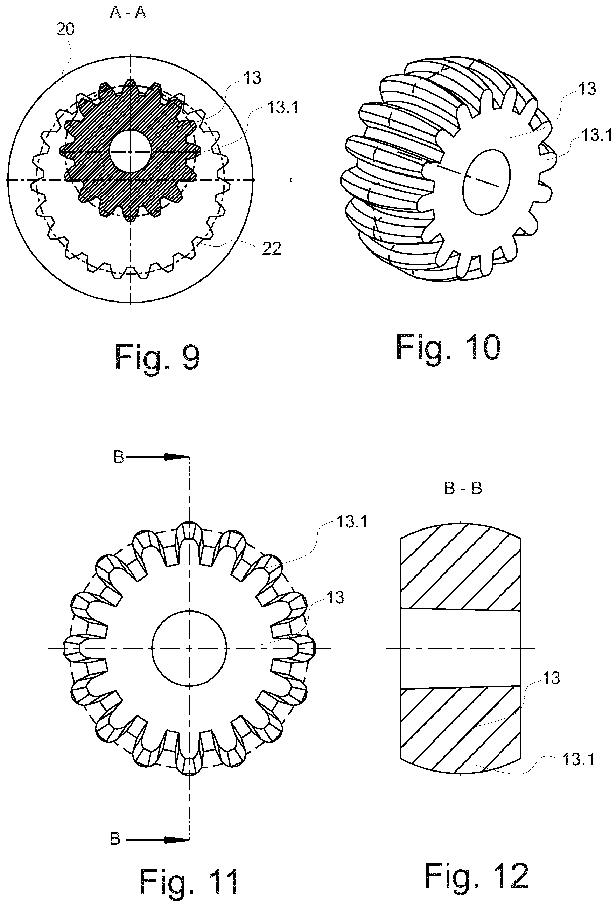

In den Figuren 9 bis 12 ist eine Ausführungsform eines Lehrenzahnrades 13 gezeigt, welches eine Evolventenverzahnung aufweist. Hierdurch wird vorteilhaft eine konstante Übersetzung bei einer optimalen Laufruhe zwischen der Innenverzahnung 22 des Bauteils 20 und der Außenverzahnung 13.1 des Lehrenzahnrades 13 ermöglicht.

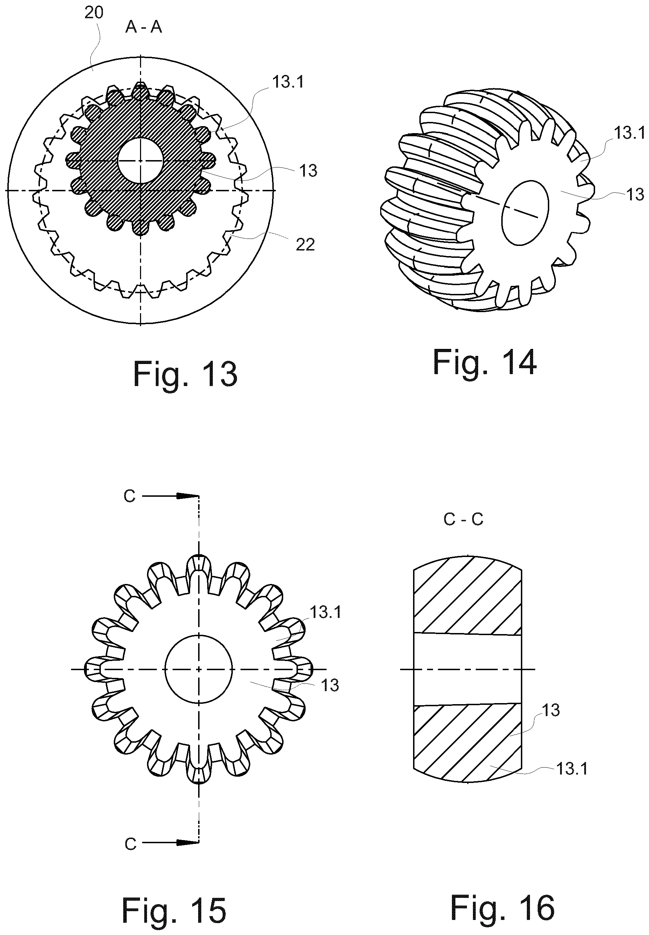

Eine alternative Ausgestaltung des Lehrenzahnrades 13 ist in den Figuren 13 bis 16 gezeigt. Vorteilhaft weist die Außenverzahnung 13. 1 des Lehrenzahnrades 13 sogenannte Kreisbogen-Flanken auf. Diese Kreisbogenflanken stellen - analog zu einer Messkugel - den Kontakt lediglich in einer Mittelebene des Lehrenzahnrades 13 her.

Beide gezeigte Ausgestaltungen des Lehrenzahnrades 13 weisen sich in axialer Richtung des Lehrenzahnrades 13 abgerundet erstreckende Zahnköpfe auf. Dadurch wird vorteilhaft auch ein prozesssicheres Eingreifen der Außenverzahnung 13.1 des Lehrenzahnrades 13 in die Innenverzahnung 22 des Bauteils 20 bei zu tolerierenden Abweichungen hinsichtlich der Parallelität der Spindeleinheitenlängsachse 30 der Spindeleinheit 4 zur Bauteillängsachse 31 des Bauteiles 20 ermöglicht.

### Bezugszeichenliste

- 1: Vorrichtung
- 2: Ermittlungssegment
- 3: Bauteilaufnahmesegment
- 4: Spindeleinheit
- 5: Abgriffsspindel
- 6: Abgabespindel
- 6.1: Lagerabschnitt
- 7: Spindelhalterung
- 8: Spindelhalterungsauflage
- 9: Spindelhalterungsfuß
- 10: Blechschnitte
- 10.1: erster Blechschnitt
- 10.2: zweiter Blechschnitt
- 11: Tragstange
- 11.1: erste Tragstange
- 11.2: zweite Tragstange
- 12: Schlitten
- 13: Lehrenzahnrad
- 13.1: Außenverzahnung des Lehrenzahnrades
- 14: Verstellelement
- 15: Messeinheit
- 16: Haltetisch
- 17: Lagerelement
- 18: Drehpunkt
- 19: Drehachse
- 20: Bauteil
- 21: Ausnehmung
- 22: Innenverzahnung
- 23: Messschlitten
- 30: Spindeleinheitenlängsachse
- 31: Bauteillängsachse
- A-A: Schnitt
- B - B: Schnitt
- C - C: Schnitt

## Patentansprüche

1. Vorrichtung (1) zur Rundlaufmessung einer Innenverzahnung (22) eines Bauteils (20), insbesondere einer Welle, wobei die Vorrichtung (1) zumindest ein Ermittlungssegment (2) zum Ermitteln einer Rundlaufabweichung aufweisend
- eine Spindeleinheit (4) umfassend eine Abgriffsspindel (5) mit einem an einem ersten Ende der Abgriffsspindel (5) angeordneten Lehrenzahnrad (13) zum Abgreifen des Rundlaufs der Innenverzahnung (22) des Bauteils (2), und eine Abgabespindel (6) zur Übertragung des abgegriffenen Rundlaufs von der Abgriffsspindel (5) auf eine Messeinheit (15), wobei die Abgabespindel (6) mittelbar oder unmittelbar an einem zweiten Ende der Abgriffsspindel (5), welches dem ersten Ende der Abgriffsspindel (5) gegenüberliegt, angeordnet ist, sowie
- eine Spindelhalterung (7) zumindest zum Halten und Positionieren der Spindeleinheit (4),
- ein Verstellelement (14) zumindest zum Positionieren wenigstens des mit der Abgriffsspindel (5) verbundenen Lehrenzahnrades (13), und
- die Messeinheit (15) zum Vergleichen des abgegriffenen Rundlaufs mit Referenzwerten.

2. Vorrichtung gemäß Anspruch 1,
**dadurch gekennzeichnet, dass**
die Vorrichtung (1) zusätzlich ein Bauteilaufnahmesegment (3) zum Aufnehmen des Bauteiles (20) aufweist, wobei das Bauteilaufnahmesegment (3) zumindest zwei axial beabstandet zueinander ausgebildete Lagerelemente (17) zur Lagerung und Ermöglichung einer Rotationsbewegung des Bauteils (20) um dessen Bauteillängsachse (31) umfasst.

3. Vorrichtung gemäß Anspruch 2,
**dadurch gekennzeichnet, dass**
wenigstens eines der Lagerelemente (17) eine Lünette ist.

4. Vorrichtung gemäß einem der Ansprüche 2 oder 3,
**dadurch gekennzeichnet, dass**
das Bauteilaufnahmesegment (3) eine Antriebseinheit zum rotatorischen Antreiben des Bauteils (20) um dessen Bauteillängsachse (31) aufweist.

5. Vorrichtung gemäß einem der vorangegangenen Ansprüche,
**dadurch gekennzeichnet, dass**
die Spindelhalterung (7) eine Spindelhalterungsauflage (8) wenigstens zum Aufnehmen der Abgriffsspindel (5) und der Abgabespindel (6) und einen Spindelhalterungsfuß (9) zum Bewegen, insbesondere zum Auslenken der Spindeleinheit (4) aufweist.

6. Vorrichtung gemäß Anspruch 5,
**dadurch gekennzeichnet, dass**
der Spindelhalterungsfuß (9) zumindest eine auslenkbare oder wenigstens abschnittsweise biegbare, insbesondere elastisch verformbare oder um eine Drehachse drehbare Konstruktion umfasst.

7. Vorrichtung gemäß einer der vorangegangenen Ansprüche 5 oder 6,
**dadurch gekennzeichnet, dass**
der Spindelhalterungsfuß (9) eine Hebelarmkonstruktion mit in einer sich in axialer Richtung der Spindeleinheitenlängsachse (30) erstreckenden Ebene zueinander kreuzenden Tragstangen (11, 11.1, 11.2) umfasst.

8. Vorrichtung gemäß Anspruch 7,
**dadurch gekennzeichnet, dass**
wenigstens eine der Tragstangen (11, 11.1, 11.2) des Spindelhalterungsfußes (9) ein Federgelenk umfasst.

9. Vorrichtung gemäß einem der vorangegangenen Ansprüche 5 oder 6,
**dadurch gekennzeichnet, dass**
der Spindelhalterungsfuß (9) eine Blechschnittkonstruktion mit sich in einer Kreuzungsachse kreuzenden Blechschnitten (10, 10.1, 10.2) ist, wobei die Kreuzungsachse sich horizontal und orthogonal zur Spindeleinheitenlängsachse (30) erstreckt.

10. Vorrichtung gemäß einem der vorangegangenen Ansprüche,
**dadurch gekennzeichnet, dass**
die Spindelhalterung (7) auf einem in axialer Richtung entlang der Spindeleinheitenlängsachse (30) verfahrbaren Schlitten (12) angeordnet ist.

11. Vorrichtung gemäß einem der vorangegangenen Ansprüche,
**dadurch gekennzeichnet, dass**
das Ermittlungssegment (2) oder das Bauteilaufnahmesegment (3) auf einem in zumindest einem, vorteilhaft zwei und besonders vorteilhaft sechs Freiheitsgraden stufenlos beweglichen Haltetisch (16) angeordnet ist.

12. Vorrichtung gemäß einem der vorangegangenen Ansprüche,
**dadurch gekennzeichnet, dass**
das Verstellelement (14) und die Messeinheit (15) an der Abgabespindel (6), vorteilhaft an einem axialen Ende der Abgabespindel (6) angeordnet und mit der Abgabespindel (6) wirkverbunden sind.

13. Verfahren zur Rundlaufmessung einer Innenverzahnung (22) eines Bauteiles (20), insbesondere einer Welle, mittels einer Vorrichtung (1) gemäß einem der vorangegangenen Ansprüche, wobei das Verfahren zumindest die folgenden Schritte umfasst:
a) Betätigen des Verstellelementes (14) zur Auslenkung der Spindeleinheit (4) derart, dass das Lehrenzahnrad (13) von einer Ruheposition in eine Einfahrposition bewegt wird,
b) Einbringen des Lehrenzahnrades (13) in eine die zu vermessende Innenverzahnung (22) aufweisende Ausnehmung (21) des Bauteiles (20),
c) erneutes Betätigen des Verstellelementes (14) zur erneuten Auslenkung der Spindeleinheit (4) derart, dass das Lehrenzahnrad (13) von einer Einfahrposition in eine Eingriffsposition bewegt wird, in welcher das Lehrenzahnrad (13) in zumindest abschnittsweise kämmenden Eingriff mit wenigstens einem Abschnitt der Innenverzahnung (22) gelangt,
d) Antreiben des Bauteiles (20) zur Erzeugung einer Drehbewegung des Bauteiles (20) um dessen Bauteillängsachse (31), und
e) Erfassen des Rundlaufs der Innenverzahnung (22) mittels des Lehrenzahnrades (13).

14. Verfahren gemäß Anspruch 13,
**dadurch gekennzeichnet, dass**
vor dem Schritt a) oder zwischen den Schritten a) und b) das Bauteil (20) in ein Bauteilaufnahmesegment (3) eingebracht und derart zum Ermittlungssegment (2) ausgerichtet wird, dass die Bauteillängsachse (31) des Bauteils (20) und die unausgelenkte Spindeleinheitenlängsachse (30) miteinander fluchten oder sich zumindest parallel zueinander erstrecken.

15. Verfahren gemäß einem der vorangegangenen Ansprüche 13 oder 14,
**dadurch gekennzeichnet, dass**
nach dem Schritt e) in einem Schritt f) der erfasste Rundlauf von dem Lehrenzahnrad (13) und der mit dem Lehrenzahnrad (13) verbundenen Abgriffsspindel (5) auf die Abgabespindel (6) derart übertragen wird, dass die mit der Abgabespindel (6) wirkverbundene Messeinheit (15) Abweichungen des Rundlaufes detektiert.

## Claims

1. A device (1) for measuring the concentricity of an internal toothing (22) of a component (20), in particular a shaft, wherein the device (1) having at least one determination segment (2) for determining a concentricity deviation, comprising
- a spindle unit (4) comprising a tapping spindle (5) having a gauge gearwheel (13) arranged on a first end of the tapping spindle (5) and intended for tapping the concentricity of the internal toothing (22) of the component (2), and an output spindle (6) for transmitting the tapped concentricity from the tapping spindle (5) to a measuring unit (15), wherein the output spindle (6) is arranged directly or indirectly on a second end of the tapping spindle (5) that is situated opposite to the first end of the tapping spindle (5), and also
- a spindle holder (7) at least for holding and positioning the spindle unit (4),
- an adjusting element (14) at least for positioning at least the gauge gear wheel (13) connected to the tapping spindle (5), and
- the measuring unit (15) for comparing the tapped concentricity with reference values.

2. The device as claimed in claim 1,
**characterized in that**
the device (1) additionally comprises a component-receiving segment (3) for receiving the component (20), wherein the component-receiving segment (3) comprises at least two bearing elements (17), which are configured to be axially spaced apart from one another, for bearing and allowing a rotational movement of the component (20) about its component longitudinal axis (31).

3. The device as claimed in claim 2,
**characterized in that**
at least one of the bearing elements (17) is a steady rest.

4. The device as claimed in either of claims 2 and 3,
**characterized in that**
the component-receiving segment (3) comprises a drive unit for rotationally driving the component (20) about its component longitudinal axis (31).

5. The device as claimed in one of the preceding claims,
**characterized in that**
the spindle holder (7) comprises a spindle holder support (8) at least for receiving the tapping spindle (5) and the output spindle (6), and a spindle holder base (9) for moving, in particular for deflecting, the spindle unit (4).

6. The device as claimed in claim 5,
**characterized in that**
the spindle holder base (9) comprises at least one deflectable or at least partially bendable construction, in particular one which is elastically deformable or rotatable about an axis of rotation.

7. The device as claimed in either of the preceding claims 5 and 6, **characterized in that**
the spindle holder base (9) comprises a lever arm construction having support rods (11, 11.1, 11.2) which cross one another in a plane extending in the axial direction of the spindle unit longitudinal axis (30).

8. The device as claimed in claim 7,
**characterized in that**
at least one of the support rods (11, 11.1, 11.2) of the spindle holder base (9) comprises a spring joint.

9. The device as claimed in either of the preceding claims 5 and 6, **characterized in that**
the spindle holder base (9) is a plate section construction having plate sections (10, 10.1, 10.2) which cross one another in a crossing axis, wherein the crossing axis extends horizontally and orthogonally to the spindle unit longitudinal axis (30).

10. The device as claimed in one of the preceding claims,
**characterized in that**
the spindle holder (7) is arranged on a carriage (12) which is movable in the axial direction along the spindle unit longitudinal axis (30).

11. The device as claimed in one of the preceding claims,
**characterized in that**
the determination segment (2) or the component-receiving segment (3) is arranged on a holding table (16) which is steplessly movable in at least one, advantageously two and, particularly advantageously, six degrees of freedom.

12. The device as claimed in one of the preceding claims,
**characterized in that**
the adjusting element (14) and the measuring unit (15) are arranged on the output spindle (6), advantageously on an axial end of the output spindle (6), and are operatively connected to the output spindle (6).

13. A method for measuring the concentricity of an internal toothing (22) of a component (20), in a particular a shaft, by means of a device (1) as claimed in one of the preceding claims, wherein the method comprises at least the following steps:
a) actuating the adjusting element (14) to deflect the spindle unit (4) in such a way that the gauge gearwheel (13) is moved from an inoperative position into a retracted position,
b) introducing the gauge gearwheel (13) into a cavity (21), which comprises the internal toothing (22) to be measured, of the component (20),
c) renewed actuating of the adjusting element (14) for renewed deflection of the spindle unit (4) in such a way that the gauge gear wheel (13) is moved from a retracted position into an engagement position in which the gauge gearwheel (13) comes into at least partial meshing engagement with at least one portion of the internal toothing (22),
d) driving the component (20) to generate a rotational movement of the component (20) about its component longitudinal axis (31), and
e) detecting the concentricity of the internal toothing (22) by means of the gauge gear wheel (13).

14. The method as claimed in claim 13,
**characterized in that**
before step a), or between steps a) and b), the component (20) is introduced into a component-receiving segment (3) and oriented with respect to the determination segment (2) in such a way that the component longitudinal axis (31) of the component (20) and the nondeflected spindle unit longitudinal axis (30) are aligned with one another or extend at least parallel to one another.

15. The method as claimed in either of the preceding claims 13 and 14,
**characterized in that**
after step e), in a step f), the detected concentricity is transmitted from the gauge gearwheel (13) and the output spindle (5) connected to the gauge gearwheel (13) to the output spindle (6) in such a way that the measuring unit (15) operatively connected to the output spindle (6) detects deviations in the concentricity.

## Revendications

1. Dispositif (1) pour mesurer la concentricité d'une denture intérieure (22) d'un composant (20), en particulier d'un arbre, le dispositif (1) présentant au moins un segment de détermination (2) pour déterminer un écart de concentricité, comprenant :
- une unité de broche (4) comprenant une broche d'acquisition (5) avec une roue dentée de jauge (13) agencée à une première extrémité de la broche d'acquisition (5) pour acquérir la concentricité de la denture intérieure (22) du composant (2), et une broche de sortie (6) pour transmettre la concentricité acquise de la broche d'acquisition (5) à une unité de mesure (15), la broche de sortie (6) étant agencée directement ou indirectement à une deuxième extrémité de la broche d'acquisition (5), qui est opposée à la première extrémité de la broche d'acquisition (5), ainsi que
- un support de broche (7) au moins pour soutenir et positionner l'unité de broche (4),
- un élément de réglage (14) au moins pour positionner au moins la roue dentée de jauge (13) reliée à la broche d'acquisition (5), et
- l'unité de mesure (15) pour comparer la concentricité acquise à des valeurs de référence.

2. Dispositif selon la revendication 1,
**caractérisé en ce que**
le dispositif (1) présente en outre un segment de réception de composant (3) pour recevoir le composant (20), le segment de réception de composant (3) comprenant au moins deux éléments de palier (17) configurés pour être espacés axialement l'un de l'autre pour soutenir et permettre un mouvement de rotation du composant (20) autour de son axe longitudinal de composant (31).

3. Dispositif selon la revendication 2,
**caractérisé en ce que**
au moins un des éléments de palier (17) est une lunette.

4. Dispositif selon l'une quelconque des revendications 2 ou 3,
**caractérisé en ce que**
le segment de réception de composant (3) présente une unité d'entraînement pour entraîner en rotation le composant (20) autour de son axe longitudinal de composant (31).

5. Dispositif selon l'une quelconque des revendications précédentes,
**caractérisé en ce que**
le support de broche (7) présente un appui de support de broche (8) au moins pour recevoir la broche d'acquisition (5) et la broche de sortie (6) et un pied de support de broche (9) pour déplacer, en particulier pour dévier l'unité de broche (4).

6. Dispositif selon la revendication 5,
**caractérisé en ce que**
le pied de support de broche (9) comprend au moins une construction pouvant être déviée ou pliée au moins en sections, en particulier déformable élastiquement ou pouvant tourner autour d'un axe de rotation.

7. Dispositif selon l'une quelconque des revendications 5 ou 6 précédentes,
**caractérisé en ce que**
le pied de support de broche (9) comprend une construction de bras de levier avec des tiges de support (11, 11.1, 11.2) se croisant les unes les autres dans un plan s'étendant dans la direction axiale de l'axe longitudinal de l'unité de broche (30).

8. Dispositif selon la revendication 7,
**caractérisé en ce que**
au moins une des tiges de support (11, 11.1, 11.2) du pied de support de broche (9) comprend une articulation à ressort.

9. Dispositif selon l'une quelconque des revendications 5 ou 6 précédentes,
**caractérisé en ce que**
le pied de support de broche (9) est une construction en tôle découpée avec des découpes de tôle (10, 10.1, 10.2) qui se croisent dans un axe de croisement, l'axe de croisement s'étendant horizontalement et orthogonalement à l'axe longitudinal de l'unité de broche (30).

10. Dispositif selon l'une quelconque des revendications précédentes,
**caractérisé en ce que**
le support de broche (7) est agencé sur un chariot (12) déplaçable dans la direction axiale le long de l'axe longitudinal de l'unité de broche (30).

11. Dispositif selon l'une quelconque des revendications précédentes,
**caractérisé en ce que**
le segment de détermination (2) ou le segment de réception de composant (3) est agencé sur une table de support (16) mobile de manière continue dans au moins un, avantageusement deux et particulièrement avantageusement six degrés de liberté.

12. Dispositif selon l'une quelconque des revendications précédentes,
**caractérisé en ce que**
l'élément de réglage (14) et l'unité de mesure (15) sont agencés sur la broche de sortie (6), avantageusement à une extrémité axiale de la broche de sortie (6), et sont reliés fonctionnellement à la broche de sortie (6).

13. Procédé pour mesurer la concentricité d'une denture intérieure (22) d'un composant (20), en particulier d'un arbre, au moyen d'un dispositif (1) selon l'une quelconque des revendications précédentes, le procédé comprenant au moins les étapes suivantes :
a) l'actionnement de l'élément de réglage (14) pour dévier l'unité de broche (4) de telle sorte que la roue dentée de jauge (13) se déplace d'une position de repos à une position d'entrée,
b) l'introduction de la roue dentée de jauge (13) dans un évidement (21) du composant (20) présentant la denture intérieure (22) à mesurer,
c) le nouvel actionnement de l'élément de réglage (14) pour dévier de nouveau l'unité de broche (4), de telle sorte que la roue dentée de jauge (13) est déplacée d'une position d'entrée dans une position d'engagement, dans laquelle la roue dentée de jauge (13) vient en prise par engrènement au moins en sections avec au moins une partie de la denture intérieure (22),
d) l'entraînement du composant (20) pour produire un mouvement de rotation du composant (20) autour de son axe longitudinal de composant (31), et
e) la détection de la concentricité de la denture intérieure (22) au moyen de la roue dentée de jauge (13) .

14. Procédé selon la revendication 13,
**caractérisé en ce que**
avant l'étape a) ou entre les étapes a) et b), le composant (20) est introduit dans un segment de réception de composant (3) et orienté par rapport au segment de détermination (2) de telle sorte que l'axe longitudinal de composant (31) du composant (20) et l'axe longitudinal de l'unité de broche (30) non dévié sont alignés l'un avec l'autre ou s'étendent au moins parallèlement l'un à l'autre.

15. Procédé selon l'une quelconque des revendications 13 ou 14 précédentes,
**caractérisé en ce que**
après l'étape e), dans une étape f), la concentricité détectée est transmise de la roue dentée de jauge (13) et de la broche d'acquisition (5) reliée à la roue dentée de jauge (13) à la broche de sortie (6), de telle sorte que l'unité de mesure (15) reliée fonctionnellement à la broche de sortie (6) détecte des écarts de la concentricité.
